# EUROPEAN PATENT APPLICATION

(11) **EP 3 287 490 A1**
(43) Date of publication of application: **28.02.2018**
(21) Application number: 16783204.7
(22) Date of filing: 20.04.2016
(51) Int. Cl.: C08L 27/12, C08K 5/053, C08K 5/13, C08K 9/06

(54) **FLUORORUBBER COMPOSITION**

(30) Priority: 24.04.2015 JP 2015089282
(71) Applicant: NOK Corporation, Minato-ku Tokyo 105-8585 (JP)
(72) Inventor: KUNIEDA Kenichi, Fujisawa-shi Kanagawa 251-0042 (JP); KOBAYASHI Atsushi, Fujisawa-shi Kanagawa 251-0042 (JP)
(74) Representative: Adam, Holger
(86) International application number: PCT/JP2016/062541
(87) International publication number: WO 2016/171183

(57) **Abstract**

A fluororubber composition that can provide a vulcanizate having excellent blister resistance, comprising 10 to 100 parts by weight of wollastonite surface-treated with a silane coupling agent and having an aspect ratio of 2 or more, and 0.5 to 10 parts by weight of a polyol-based crosslinking agent, based on 100 parts by weight of fluororubber comprising 60 to 100 wt.% of a solid fluororubber polymer and 40 to 0 wt.% of a liquid fluororubber polymer. It is preferable that 30 to 70 wt.% of wollastonite surface-treated with a silane coupling agent is replaced by wollastonite not surface-treated with a silane coupling agent, in terms of both ensuring of blister resistance and cost.

## Description

### TECHNICAL FIELD

The present invention relates to a fluororubber composition. More particularly, the present invention relates to a fluororubber composition that can provide a vulcanizate having excellent blister resistance.

### BACKGROUND ART

Fluororubber compositions have excellent heat resistance, oil resistance, etc., and are widely used as vulcanization molding materials for various sealing product in a wide range of fields, such as automobiles and various industrial machines. In particular, for sealing product used in the parts under a high temperature environment, fluororubber compositions are preferable as their sealing materials.

When the components of a material to be sealed are volatilized under a high temperature environment, blisters (blistering, foaming) may be formed on a seal. If blisters are formed in the vicinity of the seal (sliding) surface, it is difficult to ensure stable seal performance, leading to leakage in the worst case. Accordingly, there is a demand for sealing materials in which the occurrence of blisters is suppressed under a high temperature environment.

### PRIOR ART DOCUMENT

### PATENT DOCUMENT

Patent Document 1 : JP-B-5131347
Patent Document 2 : JP-A-2008-121810
Patent Document 3 : JP-A-2007-186536
Patent Document 4 : JP-A-2002-212370
Patent Document 5 : JP-A-2010-90327
Patent Document 6 : JP-A-2005-146099
Patent Document 7 : JP-A-2008-195947
Patent Document 8: JP-A-2006-193741

### OUTLINE OF THE INVENTION

### PROBLEM TO BE SOLVED BY THE INVENTION

An object of the present invention is to provide a fluororubber composition that can provide a vulcanizate having excellent blister resistance.

### MEANS FOR SOLVING THE PROBLEM

The above object of the present invention can be achieved by a fluororubber composition comprising 10 to 100 parts by weight of wollastonite surface-treated with a silane coupling agent and having an aspect ratio of 2 or more, and 0.5 to 10 parts by weight of a polyol-based crosslinking agent, based on 100 parts by weight of fluororubber comprising 60 to 100 wt.% of a solid fluororubber polymer and 40 to 0 wt.% of a liquid fluororubber polymer.

It is preferable that 30 to 70 wt.% of wollastonite surface-treated with a silane coupling agent is replaced by wollastonite not surface-treated with a silane coupling agent, in terms of ensuring of blister resistance and cost.

### EFFECT OF THE INVENTION

Because wollastonite surface-treated with a silane coupling agent is used as a filler, the real contact area of the seal sliding surface can be reduced. Further, because the thickness of an oil film present in the sliding surface is increased, sliding when liquid is tight sealed and the frictional coefficient of the seal during movement can be significantly reduced, compared with other fillers.

Moreover, when a liquid fluororubber is added to a solid fluororubber to thereby reduce hardness, it is possible to compound a larger amount of filler. However, such a compounding of filler causes forming of many defective parts in the rubber. In contrast, when wollastonite surface-treated with a silane coupling agent is used, the compatibility between rubber and wollastonite is improved to thereby reduce the defective parts, and blister resistance can be improved.

However, this method has industrial problems because the surface treatment using a silane coupling agent causes an increase in cost. To address these problems, parts of wollastonite surface-treated with a silane coupling agent are replaced by wollastonite not surface-treated with a silane coupling agent.

### EMBODIMENTS FOR CARRYING OUT THE INVENTION

The fluororubber composition of the present invention comprises 10 to 100 parts by weight of wollastonite surface-treated with a silane coupling agent and having an aspect ratio of 2 or more, and 0.5 to 10 parts by weight of a polyol-based crosslinking agent, based on 100 parts by weight of fluororubber comprising 60 to 100 wt.% of a solid fluororubber polymer and 40 to 0 wt.% of a liquid fluororubber polymer.

The applicant of the present application has proposed various fluororubber compositions prepared by mixing wollastonite with fluororubber.

Patent Document 1: This document discloses a rotary sliding seal obtained by peroxide crosslinking of a composition prepared by compounding a fluororubber polymer component comprising a ternary copolymer of vinylidene fluoride, hexafluoropropylene and perfluoroalkyl vinyl ether, and a liquid fluororubber with a wollastonite filler, etc. Patent Document 1 states that although the rotary sliding seal has excellent eccentricity follow-up property, a product obtained by polyol crosslinking of a vinylidene fluoride-hexafluoropropylene copolymer is inferior in normal physical values (elongation), low-temperature properties, torque increase ratio, and decrease ratio in pump rate, even though wollastonite, etc., are compounded.

Patent Document 2: This document discloses an oil seal obtained by compounding fluororubber with zinc oxide whisker, followed by polyol crosslinking. Patent Document 2 states that the oil seal for both normal and reverse rotations enables excellent continuous sealing of fluid even in operation of both normal and reverse rotations under high speed sliding (e.g., 6,000 revolutions), and that in a Comparative Example in which wollastonite was used in place of zinc oxide whisker, leakage of lubricating oil was confirmed in the reverse rotation direction.

Patent Document 3: This document discloses a fluororubber coating agent comprising an organic solvent solution of a fluororubber compound containing fluororubber, a polyol-based vulcanizing agent, a quaternary onium salt-based vulcanization accelerator, and a basic magnesium aluminum hydroxy carbonate hydrate acid acceptor. Patent Document 3 states that in a rubber layer formed by using the fluororubber coating agent, peeling and flow due to adhesiveness to a metal plate immediately after vulcanization and compression under high temperature and high pressure conditions do not occur. There is a general description that wollastonite or the like can be added as a needle-like filler.

Patent Document 4: This document discloses a fluororubber vulcanization molded product obtained by vulcanization molding of a rubber composition comprising a filler having an average particle diameter of 1 to 50 µm and an aspect ratio of 5 or more, or a fibrous or needle-like filler having an average fiber length of 1 to 500 µm, such as wollastonite, in an amount of 5 to 100 parts by weight based on 100 parts by weight of fluororubber. Patent Document 4 states that the fluororubber vulcanization molded product has a slight increase in hardness, and excellent shock absorption and non-adhesiveness.

Patent Document 5: This document discloses a fluorine-containing elastomer composition comprising a polyol crosslinkable fluorine-containing elastomer, a polyol-based crosslinking agent, and a tetrabutyl phosphonium hydrogen fluoride crosslinking accelerator. Patent Document 5 states that a filler, such as wollastonite, can be compounded into the composition, and that the effects obtained thereby are faster vulcanization rate than that of conventionally proposed vulcanizable compositions, and significantly shortened time of oven vulcanization (secondary vulcanization).

Moreover, the applicant of the present application has made the following proposals for the crosslinking of a fluororubber blended product of a solid fluororubber and a liquid fluororubber.

Patent Document 6: This document discloses a fluororubber composition prepared by compounding a fluororubber blended product of a solid fluororubber and a liquid fluororubber with perfluoroalkane F(CF₂)₂ₙF (n: 5 to 30) or 1H-perfluoroalkane F(CF₂)ₘH (m: 10 to 30), wherein the fluororubber composition has excellent kneading processability and mold releasability, as well as excellent normal-state physical properties and compression set after vulcanization. In Comparative Example 4 in which 28.6% of a liquid fluororubber was blended, the mold release ratio was inferior.

Patent Document 7: This document discloses peroxide crosslinking or polyol crosslinking of a fluororubber blended product of a solid fluororubber and a liquid fluororubber. Patent Document 7 states that the effects obtained thereby are excellent processability and compression set characteristics.

Furthermore, an example of the combined use of wollastonite surface-treated with an epoxy group-containing silane coupling agent and wollastonite not surface-treated is as follows.

Patent Document 8: This document discloses a processable rubber composition comprising a vulcanized fluorocarbon elastomer and an abrasion-reducing additive dispersed in a matrix of a thermoplastic polymer material. Patent Document 8 states that the processable rubber composition can be molded into a seal, a gasket, an O ring, a hose, or the like by a conventional thermoplasticization process, such as blow molding, injection molding, or extrusion.

Further, the Examples of Patent Document 8 disclose processable rubber compositions prepared by adding 1.0 pphr of a silane coupling agent, 10.00 pphr of wollastonite, 5.00 pphr of epoxy silane coupling agent-treated wollastonite, etc., to 100 pphr of a blended product of a VDF/HFP/TFE terpolymer and a TFE/P/VDF terpolymer, and a low viscosity fluoroelastomer or a cured fluoroelastomer. The processable rubber compositions were cured using Ca(OH)₂ or peroxide. Polyol vulcanization is merely mentioned in the general description.

Eventually, none of these patent documents teaches or suggests that crosslinked products of fluororubber compositions having the constitution of the present invention have excellent blister resistance.

Examples of the solid fluororubber include a known fluororubber having a weight average molecular weight Mw (40°C, gel permeation chromatography, solvent: tetrahydrofuran, polystyrene conversion) of about 50,000 to 300,000, specifically a copolymer of vinylidene fluoride, which is used as a main component, and at least one other fluorine-containing olefin, such as hexafluoropropene, pentafluoropropene, trifluoroethylene, trifluorochloroethylene, tetrafluoroethylene, vinyl fluoride, perfluoro(acrylic acid ester), acrylic acid perfluoroalkyl, perfluoro(alkyl vinyl ether), etc.; a tetrafluoroethylene-propylene copolymer; a tetrafluoroethylene-propylene-vinylidene fluoride ternary copolymer; and the like.

In contrast, examples of the liquid fluororubber polymer include a vinylidene fluoride-hexafluoropropylene copolymer, a vinylidene fluoride-hexafluoropropylene-tetrafluoroethylene ternary copolymer, a perfluoropropylene oxide-based copolymer, and the like. The viscosity (100°C) thereof is in the range of about 400 to 4000 cps, preferably about 500 to 3000 cps.

If a liquid fluororubber polymer having a viscosity of equal to or less than this range is used, characteristics similar to fluorine oil are exhibited. This makes kneading difficult, and the liquid fluororubber polymer is easily extracted from molded products after vulcanization. In contrast, if a liquid fluororubber polymer having a viscosity of equal to or greater than this range is used, flowability is reduced, and moldability is deteriorated. Moreover, if a liquid fluororubber polymer is used at a ratio of 40 wt.% or more in the total amount of the liquid fluororubber polymer and a solid fluororubber polymer, kneading itself becomes difficult.

The liquid fluororubber polymer is obtained by solution polymerization, suspension polymerization, or emulsion polymerization, according to a conventionally known method, and is commercially available (e.g., Diel G-101, produced by Daikin Industries, Ltd.; SIFEL series, produced by Shin-Etsu Chemical Co., Ltd.; Viton LM, produced by Du Pont; etc.).

The wollastonite used herein is one that has an aspect ratio of 2 or more and has a general shape, rather than a particle shape. Wollastonite surface-treated with a silane coupling agent, particularly an epoxy group-containing silane coupling agent, is used at a ratio of about 10 to 100 parts by weight based on 100 parts by weight of the fluororubber. If the ratio of wollastonite is equal to or less than this range, blister resistance cannot be improved. In contrast, if the ratio of wollastonite is equal to or greater than this range, physical properties are significantly reduced, thereby causing problems in terms of processing and product function.

The epoxy group-containing silane coupling agent used herein is a silane compound represented by the general formula: 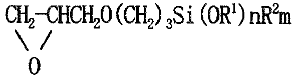 (R¹, R²: an alkyl group having 1 to 4 carbon atoms; n, m: 1 ≦ n ≦ 3, m = 3 - n), and in clude, for example, γ-glycidoxypropyltrimethoxysilane, γ-glycidoxypropyltriethoxysilane, γ-glycidoxypropyltripropoxysilane, γ-glicidoxypropylmethyldimethoxysilane, γ-glycidoxypropylmethyldiethoxysilane, γ-glicidoxypropylmethyldipropoxysilane, etc.

However, the use of wollastonite surface-treated with a silane coupling agent results in an improvement in blister resistance, but causes an increase in cost; therefore, when 30 to 70 wt.% of wollastonite surface-treated with a silane coupling agent is replaced by wollastonite not surface-treated with a silane coupling agent, both ensuring of blister resistance and cost can be simultaneously satisfied.

The fluororubber composition comprising the above essential components is crosslinked using a polyol-based crosslinking agent, preferably a polyol-based crosslinking agent/a quaternary onium salt vulcanization accelerator.

Examples of usable polyol-based crosslinking agents include 2,2-bis(4-hydroxyphenyl)propane [bisnol A], 2,2-bis(4-hydroxyphenyl)perfluoropropane [bisphenol AF], bis(4-hydroxyphenyl) sulfone [bisphenol S], 2,2-bis(4-hydroxyphenyl)methane [bisphenol F], bisphenol A-bis(diphenyl phosphate), 4,4'-dihydroxydiphenyl, 2,2-bis(4-hydroxyphenyl)butane, and the like. Bisphenol A, bisphenol AF, and the like are preferably used. These polyol-based crosslinking agents may be in the form of alkali metal salts or alkaline earth metal salts. The polyol-based crosslinking agent can be used usually in a proportion of about 0.5 to 10 parts by weight, preferably about 1 to 5 parts by weight, based on 100 parts by weight of the fluororubber.

Examples of the vulcanization accelerators include a quaternary ammonium salt, or a quaternary phosphonium salt, or a quaternary onium salt, such as an equimolar compound of quaternary phosphonium salt and an active hydrogen-containing aromatic compound or the like, are used; preferably a quaternary phosphonium salt is used. The quaternary phosphonium salts are compounds represented by the following general formula:

[PR¹R²R³R⁴]⁺X⁻

where R¹ to R⁴ are alkyl groups having 1 to 25 carbon atoms, alkoxyl groups, aryl groups, alkylaryl groups, aralkyl groups or polyoxyalkylene groups, two or three of which may form a heterocyclic structure together with P, and X⁻ is an anion of Cl⁻, Br⁻, I⁻, HSO₄⁻, H₂PO₄⁻, RCOO⁻, ROSO₂⁻, CO₃^{- -}, etc., and specifically include tetraphenylphosphonium chloride, benzyltriphenylphosphonium bromide, benzyltriphenylphosphonium chloride, triphenylmethoxymethylphosphonium chloride, triphenylmethylcarbonylmethylphosphonium chloride, triphenylethoxycarbonylmethylphosphonium chloride, trioctylbenzylphosphonium chloride, trioctylmethylphosphonium chloride, trioctylethylphosphonium acetate, tetraoctylphosphonium chloride, etc. Moreover, the quaternary ammonium salts are compounds represented by the following general formula :

[NR¹R²R³R⁴]⁺X⁻

(where R¹-R⁴ and X⁻ have the same meanings as defined above) and include, for example, 1-alkylpyridinium salts, 5-aralkyl-1,5-diazabicyclo[4,3,0]-5-nonenium salts, 8-aralkyl-1,8-diazabicyclo[5,4,0]-7-undecenium salts, etc. The quaternary onium salt can be used in a proportion of about 0.1 to 10 parts by weight, preferably about 1 to 5 parts by weight, based on 100 parts by weight of the fluororubber.

When fluororubber is polyol-crosslinked, about 0.5 to 10 parts by weight, preferably about 1 to 7 parts by weight, of calcium hydroxide, and about 0.5 to 10 parts by weight, preferably about 1 to 5 parts by weight, of magnesium oxide are compounded based on 100 parts by weight of the fluororubber and the composition is used. If the amount of calcium hydroxide is less than this range, vulcanization is delayed. In contrast, if the amount of calcium hydroxide is greater than this range, compression set resistance characteristics are deteriorated. Moreover, if the amount of magnesium oxide is less than this range, compression crack resistance is deteriorated. In contrast, if the amount of magnesium oxide is greater than this range, scorch occurs during vulcanization.

Further, in order to adjust the hardness (according to JIS K6253) of the vulcanization molded product to, for example, about 60 to 90, which is required as a seal part, it is also preferable to compound carbon black, such as SRF carbon black, in an adequate amount of about 1 to 30 parts by weight based on 100 parts by weight of the fluororubber.

The preparation of the rubber composition is performed by mixing a processing aid and other necessary compounding agents, and kneading the mixture using a kneader (e.g., intermix, kneader, or Banbury mixer) or an open roll. Molding (crosslinking or vulcanization molding) is generally performed by heating at about 160 to 200°C for about 3 to 30 minutes using a known method, such as vulcanizing press, optionally followed by secondary crosslinking (secondary vulcanization) by heating at about 150 to 250°C for about 0.5 to 24 hours.

### EXAMPLES

The following describes the present invention with reference to Examples.

### Example 1

| | |
|---|---|
| Solid fluororubber (Viton A-500, produced by DuPont) | 80 parts by weight |
| Liquid fluororubber | 20 parts by weight |
| (Daiel G-101, produced by Daikin Industries, Ltd.; | |
| viscosity (100°C) 1200 cps) | |
| Epoxy group-containing silane coupling agent-treated | 20 parts by weight |
| wollastonite (Wollastcoat 10222 produced by | |
| NYCO; aspect ratio: 5) | |
| SRF carbon black | 25 parts by weight |
| MgO | 3 parts by weight |
| Ca(OH)₂ | 6 parts by weight |
| Processing aid | 2 parts by weight |
| (VPA No.2 produced by DuPont·Dow Elastomers) | |
| Bisphenol AF | 1.5 parts by weight |
| Quaternary phosphonium salt | 1.5 parts by weight |
| (Viton VC#20, produced by DuPont) | |

The above components were kneaded by any kneading means using an open roll, kneader, or the like, thereby preparing an unvulcanized fluororubber composition. For tests, the fluororubber composition was press-vulcanized at 180°C for 8 minutes, and then maintained in an atmosphere at 230°C for 9 hours to perform secondary vulcanization, thereby preparing a vulcanized sheet (thickness: 2 mm).

The prepared vulcanized sheet was measured and evaluated for the following items.
Hardness: according to JIS K6253 corresponding to ISO 7619-1 (Duro A, peak)
Blister resistance test: The vulcanized sheet was dipped in flon R-134a (CH₂FCF₃) at 40°C for 24 hours, and then allowed to stand at 40°C for 1 hour. The appearance of the vulcanized sheet was visually observed and evaluated as follows: no blisters (blistering) were observed: ⊚, blisters were observed: ×.

This evaluation satisfies blister resistance in a high temperature environment at 120°C or more.

### Example 2

In Example 1, the amount of silane coupling agent-treated wollastonite was changed to 40 parts by weight, and the amount of SRF carbon black for adjusting hardness (about 80) was changed to 15 parts by weight, respectively.

### Example 3

In Example 1, the amount of silane coupling agent-treated wollastonite was changed to 60 parts by weight, and the amount of SRF carbon black for adjusting hardness (about 80) was changed to 5 parts by weight, respectively.

### Example 4

In Example 1, the amount of silane coupling agent-treated wollastonite was changed to 80 parts by weight, and no SRF carbon black for adjusting hardness (about 80) was used.

### Example 5

In Example 3, in which 5 parts by weight of SRF carbon black was used, the amount of silane coupling agent-treated wollastonite was changed to 20 parts by weight (33 wt.%), and 40 parts by weight (67 wt.%) of wollastonite not treated with a silane coupling agent (NYAD 400, produced by NYCO) was used.

### Example 6

In Example 3, in which 5 parts by weight of SRF carbon black was used, the amount of silane coupling agent-treated wollastonite was changed to 30 parts by weight (50 wt.%), and 30 parts by weight (50 wt.%) of wollastonite (NYAD 400) was used.

### Example 7

In Example 3, in which 5 parts by weight of SRF carbon black was used, the amount of silane coupling agent-treated wollastonite was changed to 40 parts by weight (67 wt.%), and 20 parts by weight (33 wt.%) of wollastonite (NYAD 400) was used.

### Comparative Example 1

In Example 2, in which 15 parts by weight of SRF carbon black was used, the same amount (40 parts by weight) of wollastonite (NYAD 400) was used instead of silane coupling agent-treated wollastonite.

### Comparative Example 2

In Example 3, in which 5 parts by weight of SRF carbon black was used, the same amount (60 parts by weight) of wollastonite (NYAD 400) was used instead of silane coupling agent-treated wollastonite.

### Comparative Example 3

In Example 4, in which no SRF carbon black was used, the same amount (80 parts by weight) of wollastonite (NYAD 400) was used instead of silane coupling agent-treated wollastonite.

### Comparative Example 4

In Example 3, in which 5 parts by weight of SRF carbon black was used, the amount of silane coupling agent-treated wollastonite was changed to 10 parts by weight (16.7 wt.%), and 50 parts by weight (83.3 wt.%) of wollastonite (NYAD 400) was used.

### Comparative Example 5

In Example 4, in which no SRF carbon black was used,, the amount of silane coupling agent-treated wollastonite was changed to 20 parts by weight (25 wt.%), and 60 parts by weight (75 wt.%) of wollastonite (NYAD 400) was used.

The following table shows the measurement and evaluation results in the Examples and Comparative Examples above, together with the amount of silane coupling agent-treated (Si-treated) wollastonite, the amount of wollastonite, and the amount of SRF carbon black, in the unvulcanized fluororubber compositions.

**Table**

| | Example | | | | | | | Comparative Example | | | | |
|---|---|---|---|---|---|---|---|---|---|---|---|---|
| | 1 | 2 | 3 | 4 | 5 | 6 | 7 | 1 | 2 | 3 | 4 | 5 |
| [Composition: parts by weight] | | | | | | | | | | | | |
| Si-treated wollastonite | 20 | 40 | 60 | 80 | 20 | 30 | 40 | - | - | - | 10 | 20 |
| Wollastonite | - | - | - | - | 40 | 30 | 20 | 40 | 60 | 80 | 50 | 60 |
| SRF carbon black | 25 | 15 | 5 | 0 | 5 | 5 | 5 | 15 | 5 | 0 | 5 | 0 |

| [measured· evaluated] | | | | | | | | | | | | |
|---|---|---|---|---|---|---|---|---|---|---|---|---|
| Hardness | 80 | 80 | 80 | 82 | 79 | 80 | 79 | 79 | 80 | 82 | 80 | 80 |
| Blister resistance | ⊚ | ⊚ | ⊚ | ⊚ | ⊚ | ⊚ | ⊚ | × | × | × | × | × |

The above results reveal the following.
(1) In Examples 1 to 4, in which wollastonite surface-treated with a silane coupling agent was used, the foaming resistance when brought into contact with flon R-134a was significantly improved.
(2) In Examples 5 to 7, in which wollastonite surface-treated with a silane coupling agent was blended with wollastonite at a ratio of 30 to 70 wt.% in the total amount of the wollastonites, the foaming resistance was significantly improved, and cost reduction could be achieved.
(3) In Comparative Examples 1 to 3, in which wollastonite not surface-treated with a silane coupling agent was used, the foaming resistance was inferior.
(4) In Comparative Examples 4 and 5, in which the ratio of wollastonite surface-treated with a silane coupling agent was less than 30 wt.%, the foaming resistance was inferior.

### INDUSTRIAL APPLICABILITY

Vulcanization molded products of the fluororubber composition of the present invention can be used as, for example, sealing material used in parts to be exposed to a high temperature environment at 120°C or more; seal parts generally used as O rings, gaskets, and packing; or other rubber parts. Examples of other rubber parts mentioned herein include oil seals, valves, and the like.

In particular, fuel consumption improvement has recently been required from the viewpoint of protecting the global environment. In order to reduce friction loss, for example, the viscosity of lubricating oil, etc., is reduced. Vulcanization molded products of the fluororubber composition of the present invention can also be effectively used as sealing materials in which blisters are not occurred even when low molecular weight components, etc., contaminated in such lubricating oil are volatilized in a high temperature environment.

## Claims

1. A fluororubber composition comprising 10 to 100 parts by weight of wollastonite surface-treated with a silane coupling agent and having an aspect ratio of 2 or more, and 0.5 to 10 parts by weight of a polyol-based crosslinking agent, based on 100 parts by weight of fluororubber comprising 60 to 100 wt.% of a solid fluororubber polymer and 40 to 0 wt.% of a liquid fluororubber polymer.

2. The fluororubber composition according to claim 1, wherein a fluororubber having a viscosity (100°C) in the range of about 400 to 4000 cps is used as the liquid fluororubber.

3. The fluororubber composition according to claim 1, wherein the silane coupling agent is an epoxy group-containing silane coupling agent.

4. The fluororubber composition according to claim 1, wherein 30 to 70 wt.% of wollastonite surface-treated with a silane coupling agent is replaced by wollastonite not surface-treated with a silane coupling agent.

5. The fluororubber composition according to claim 1 or claim 4, wherein 0.1 to 10 parts by weight of a quaternary onium salt-based vulcanization accelerator is further comprised.

6. The fluororubber composition according to claim 1 or claim 4, wherein 0.5 to 10 parts by weight of calcium hydroxide, and 0.5 to 10 parts by weight of magnesium oxide are further comprised.

7. The fluororubber composition according to claim 1, 4 or 5, which is used as a vulcanization molding material of a sealing material.

8. A vulcanization molded product having excellent blister resistance, which is obtained by vulcanization molding of the fluororubber composition according to claim 1, 4 or 5.
